# EUROPEAN PATENT APPLICATION

(11) **EP 4 001 244 A1**
(43) Date of publication of application: **25.05.2022**
(21) Application number: 20000419.0
(22) Date of filing: 23.11.2020
(51) Int. Cl.: C04B 41/60, C04B 41/71

(54) **STARCH AS A PRIMER FOR SUBSTRATES**

(71) Applicant: Knauf Gips KG, 97346 Iphofen (DE)
(72) Inventor: GAMBICHLER, Caroline, 97357 Kirchschönbach (DE); RÜCKEL, Anne, 97332 Volkach (DE); KEPPLER, Linda, 97346 Iphofen (DE)

(57) **Abstract**

The invention relates to a process for coating a substrate comprising the steps of (i) applying a primer on the substrate; (ii) applying a coating on the primed substrate; and (iii) drying and/or hardening the applied coating; wherein the primer is an aqueous primer comprising one or more pregelatinized starches.

## Description

The invention relates to a process for coating a mineral or non-mineral substrate wherein a primer comprising pregelatinized starch is applied on the substrate before it is coated. The coating is preferably a plaster or filler. The invention is further concerned with the coated substrate obtainable by the process, a primer composition and the use of pregelatinized starch for priming.

### Prior art

Aqueous polymer dispersions are widely used in the building field as a primer or undercoat for the preparation of porous or dense substrates prior to coating or filling, plastering, bonding or wallpapering work. The requirements to be satisfied by a primer are manifold, such as penetration into porous substrates, dust binding and consolidation of unstable surfaces, setting of a defined absorbency, promotion of adhesion between substrate and coatings to be applied subsequently.

Aqueous polymer dispersions include a base polymer such as acrylic ester copolymers, e.g. styrene acrylates, or ethylene vinyl acetate copolymers. The base polymer is usually mixed with suitable additives to adjust certain properties such as minimum film temperature (MFT), film hardness, wetting behaviour, defoaming, antifreeze and preservation.

Primers are also designated as deep (penetrating) primer or undercoat. The primers are applied directly or diluted to the substrate such as bricks or masonry, fillers (also designated putties), plasterboards, plasters, cement screeds, calcium sulphate screeds. The primers are inexpensive and can be produced with simple equipment from readily available polymer dispersions. The craftsman on the building site applies the primer either undiluted or diluted with water in the ratio specified by the manufacturer, depending on the task at hand.

WO 97/35818 describes the use of a redispersion powder for priming mineral and non-mineral substrates before coating, in particular filling, wherein the redispersion powder is based on acrylate and vinyl ester copolymers.

EP 1624122 A2 relates to an arrangement of a sound absorbing element attached to the inner side of an external wall of a building, comprising a lower layer with cellulose as the main component and a connected upper layer, wherein the lower layer is sprayed onto the inner side of an external wall of a building and the upper layer includes a plaster coating.

EP 0521920 B1 is concerned with a deep primer based on fine-particle aqueous polymer dispersions containing particular alcohol ethoxylates in a quantity of 5 to 80% by weight, based on the solids content, and optionally additives.

JP 2008201997 A relates to a coating material for wall surfaces comprising a mixture of 70-85 wt.% of water-insoluble cellulose and 15-30 wt.% of adhesive, where the adhesive comprises one or two or more among starch paste, konjak paste and cellulose ether, wherein an anchor coat may be applied on the wall substrate before applying the coating material.

KR 100653385 B1 relates to a soundproof and fireproof interior construction materials containing a base plate made of a magnesium oxide disk and provided with holes; a surface member layer composed of starch, polyethylene oxide, sorbic acid, cellulose ethane, and ammonium phosphates and chips or powder of cotton yarn, chaff, straw and cork; and a sound absorber layer formed between the base plate and the surface member layer composed of starch, polyethylene oxide, sorbic acid, cellulose, ammonium phosphate, and paper cellulose.

A disadvantage of conventional primers based on aqueous polymer dispersions is that the polymers contained are synthetic polymers consuming natural resources and producing microplastics the degradation of which in the environment is difficult. This is a problem with respect to ecological aspects.

Thus, there is a need for alternative primers, which are more environment-friendly and devoid of microplastics and which have at the same time properties, which are at least comparable with that of conventional primers.

### Detailed description of the invention

In the investigations underlying the present invention, it has unexpectedly been found that these objectives can be achieved by using pregelatinzed starch for priming substrates.

The invention therefore relates a method as defined in claim 1 as well as the coated substrate, a corresponding primer composition and the use according to the further independent claims. Preferred embodiments of the invention are indicated in the dependent claims.

Accordingly, the present invention concerns a process for coating a substrate comprising the steps of:
(i) applying a primer on the substrate;
(ii) applying a coating on the primed substrate; and
(iii) drying and/or hardening the applied coating;
wherein the primer is an aqueous primer comprising one or more pregelatinized starches.

The advantage of the invention is that pregelatinized starches used in the primer is based on a renewable raw material and that microplastics are avoided. Surprisingly, the primer according to the invention has at least comparable or in part even better properties compared to conventional primers. The adhesion promoting effect is comparable or even superior to that of conventional primers.

The aqueous primer comprising one or more pregelatinized starches is used for priming mineral and non-mineral surfaces or substrates, respectively. Priming with the primer mainly improves the adhesion between the substrate and the subsequent coating, mainly by binding dust and reducing the absorbency of the substrate.

The process for coating a substrate according to the invention comprises the step of (i) applying a primer on the substrate before a subsequent coating. The substrate can be an absorbing substrate or a non-absorbing substrate. The substrate can be a mineral substrate or a non-mineral substrate. The substrate is preferably a substrate of a building.

According to a preferred embodiment, the mineral substrate is selected from a brick or masonry, a concrete substrate, a plasterboard, a filler, a plaster, stone, or a tile. The bricks or masonry are in particular absorbent bricks or masonry, e.g. cellular concrete bricks, lime-sand bricks or red bricks. Plasterboard is also designated as drywall. Filler is also designated as levelling compound, jointing compound or putty. Examples for tiles are terrazzo tiles and ceramic tiles. The substrate such as stone or tiles may be used substrates. As a non-mineral substrate, for example, a wood substrate such as wood chipboard can be mentioned.

According to the invention, a primer is applied to the substrate, wherein the primer is an aqueous primer comprising one or more pregelatinized starches.

Pregelatinized starch is a modified starch. Pregelatinized starch is starch, which has been hydrothermally treated, typically cooked in water, and then dried, usually on a drum dryer or in an extruder, making the starch soluble or swellable, respectively, in cold water. The pregelatinized starch is preferably well soluble in cold and warm water. Accordingly, the aqueous primer preferably comprises an aqueous solution of pregelatinized starch. The aqueous primer is therefore preferably an aqueous solution.

The pregelatinized starch may be a pregelatinized starch dried in a drum dryer or a pregelatinized starch dried with an extruder.

The starch of the one or more pregelatinized starches is preferably selected from a starch of wheat, waxy wheat, potato, corn, waxy corn, rice or peas or a mixture of two or more thereof.

The pregelatinized starch may be based on an otherwise unmodified starch or a starch with a further modification. Such modified starch may be selected from a propoxylated starch, an enzyme-treated starch, an acid-treated starch, a phosphate-crosslinked starch or a coated starch. This modification may be effected before, during or after pregelatinization of the starch.

In addition to pregelatinized starch, the primer may further comprise one or more additives selected from e.g. preservatives, wetting agents, dispersing agents, defoamers, fillers, including fibrous fillers, anti-blocking agents, and plasticizers such as glycol. The use of such additives is conventional in this technical field. Such additives may be used to improve the processing or performance properties of the primer.

The total amount of additives is preferably less than 5% by weight, based on the dry weight of the primer. The dry weight is intended to mean the weight of the primer without its water content.

The primer is an aqueous primer, hence it comprises water. The aqueous primer is a liquid primer and preferably a paste-like primer, i.e. a paste. It can be delivered in such a form as a ready-to-use aqueous primer or as a concentrate, e.g. in suitable containers.

Of course, it may be diluted with further water before use, if necessary. Depending on the viscosity of the starch and the quantity used, highly concentrated or liquid pastes can be obtained for delivery. The primer can be easily brought to the required processing consistency by the craftsman using water under construction conditions on site.

In a preferred embodiment, a solid form of the primer is sold as a dry mix, which may be soluble, emulsifiable or dispersible in water. A usable primer is then obtained on site by adding and mixing with water. By varying the concentration, appropriate primers can be produced according to the absorbency of the substrate.

Thus, the process may further comprise the step of preparing the aqueous primer by adding water to a solid primer comprising or consisting of one or more pregelatinized starches. Of course, the solid primer may further comprise one or more additives as described above. Hence, the solid primer may consist of one or more pregelatinized starches or is obtained by adding and mixing one or more additives to the one or more pregelatinized starches.

The solid primer is preferably a free-flowing solid. The solid primer is usually a dry mixture or powder. It may be also in an aggregated form such as in the form of granules. The aqueous primer can be obtained from the solid primer by addition of water. The terms solid and solid primer are used here interchangeably.

Storing and distributing the primer in form of a solid or powder to be mixed by the user has several advantages. At first, the customer would not have to "buy" the water as with previous primers and the solid version is frost resistant. A cardboard box can be used for packaging a solid primer or powdered primer so that there is little packaging effort. In addition, no or only a few preservatives such as biocides, fungicides, etc. would have to be added to the solid primer. This would be more difficult in a liquid form, as starch forms a good breeding ground for microorganisms.

In a preferred embodiment, the primer comprises 80 % by weight to 100 % by weight, preferably 90 % by weight to 100 % by weight, most preferably 97 % by weight to 100 % by weight of the one or more pregelatinized starches, based on the dry weight of the primer.

For the application, the water content of the aqueous primer may be e.g. from 80 % by weight up to 99 % by weight, preferably 85 % by weight to 95 % by weight, most preferably 89 % by weight to 91 % by weight, based on the total weight of the aqueous primer.

The aqueous primer may be applied to the substrate by conventional means, e.g. by brushing or spraying. The primer applied on the surface is preferably dried before the coating is applied. A suitable drying time depends on the type of substrate but is usually from 1 to 24 hours, preferably from 16 to 24 hours. Drying can be effected at environmental conditions such as standard atmosphere.

The inventive process further comprises the step of applying a coating on the substrate, which have been provided with the primer.

The coating may be any suitable coating for a substrate, in particular for a substrate of a building. The coating is preferably a plaster or filler, more preferably selected from a plaster or filler based on clay, gypsum, lime, cement, cement-lime or synthetic resin. In a preferred embodiment, the coating is selected from clay plaster, gypsum plaster, lime plaster, cement plaster, cement-lime plaster, synthetic resin plaster, gypsum filler, cement filler or synthetic resin filler.

In a preferred embodiment, the coating is applied by filling or plastering. After application, the coating is dried and/or hardened.

The present invention also relates to a coated substrate, which is obtainable by the inventive process as described above. All process steps, materials, features and related statements related to the process also apply to the coated substrate so that reference is made thereto.

The present invention is also directed to a primer composition to be used on a substrate in order to enhance adhesion of a subsequent coating on the substrate, wherein the primer composition consists of or comprises one or more pregelatinized starches, in particular the solid primer or the aqueous primer as described above. All process steps, materials, features and related statements related to the process also apply to the primer composition so that reference is made thereto. The primer composition is usually a solid, preferably a free-flowing solid, to be supplemented with water before use for priming, or an aqueous primer composition such as a ready-to-use aqueous primer or an aqueous concentrate.

The present invention also relates to a use of a composition consisting of or comprising one or more pregelatinized starches for priming a substrate to be coated with a coating. The composition consisting of or comprising one or more pregelatinized starches is in particular the solid primer or the aqueous primer as described above.

In a preferred embodiment, the composition is a solid, preferably a free-flowing solid, to be supplemented with water before use for priming, or wherein the composition is a ready-to-use aqueous primer or a concentrate, which can be diluted with water before use, if necessary. The concentrate refers to an aqueous primer concentrate.

All process steps, materials, features and related statements related to the process also apply to the inventive use so that reference is made thereto.

In the following, the present invention will further be illustrated by means of examples, which should however not be construed as limiting in any way to the scope of this application.

### Examples

### Adhesion tests

Red bricks as a substrate were pre-treated with the following primers

| | |
|---|---|
| Aufbrennsperre 1:4 | concentrated primer on a synthetic resin emulsion basis, from Knauf Gips KG, dilution ratio (by volume) Aufbrennsperre : water = 1:4 |
| Lightec 10% | from Kröner-Stärke GmbH, pregelatinized wheat starch having excellent cold swelling properties, moisture content about 8%, used as a 10 % by weight solution in water |
| CWS 30 10% | Allstarch Swellster CWS 30 from Interstarch GmbH, pregelatinized native waxy corn starch, white / yellowish powder, water content 3 to 10%, obtained by physical extraction from waxy corn, used as a 10 % by weight solution in water |

CWS 30 10% and Lightec 10% are used according to the invention, Aufbrennsperre 1:4 is a prior art primer.

After application of the primer on the red brick substrate and drying of the primer, one of the following coatings was applied on the primed substrate according to the instructions of the manufacturer:

| | |
|---|---|
| Rotband Embsen | Gypsum plaster from Knauf Gips KG, manufactured in Embsen |
| MP 75 L Neuherberg | Gypsum plaster from Knauf Gips KG, manufactured in Neuherberg |

The adhesion of the gypsum plasters is tested according to DIN EN 13279-2, issue date March 2014. The results are shown in the following tables.

HR means adhesive crack ("Haftriss"), PR means plaster crack ("Putzriss"). An adhesive crack means that the adhesion of the plaster will eventually crack, i.e. the adhesion is not as good. If the plaster cracks, the adhesion of the plaster to the substrate is obviously better than the internal strength of the plaster itself. So if there is no adhesive crack, but "only" a plaster crack (100%), this can be seen as very positive, because the plaster practically does not crack in itself under real conditions.

**Table 1. Primer: Aufbrennsperre 1:4, Coating: Rotband Embsen**

| measured values scale | crack pattern | adhesive tensile strength [N/mm²] | average [N/mm²] | average crack pattern |
|---|---|---|---|---|
| 0 | demolished | 0.00 | 0.38 | 40%HR / 60%PR |
| 60 | 50%HR/50%PR | 0.31 | | |
| 82.5 | 20%HR/80%PR | 0.42 | | |
| 125 | 40%HR/60%PR | 0.64 | | |
| 57.5 | 100% PR | 0.29 | | |
| 47.5 | 100% PR | 0.24 | | |

**Table 2. Primer: Lightec 10%, Coating: Rotband Embsen**

| measured values scale | crack pattern | adhesive tensile strength [N/mm²] | average [N/mm²] | average crack pattern |
|---|---|---|---|---|
| 67.5 | 100% PR | 0.34 | 0.35 | 100% PR |
| 120 | 100% PR | 0.61 | | |
| 75 | 100% PR | 0.38 | | |
| 50 | 100% PR | 0.25 | | |
| 50 | 100% PR | 0.25 | | |
| 55 | 100% PR | 0.28 | | |

**Table 3. Primer: CWS 30 10%, Coating: Rotband Embsen**

| measured values scale | crack pattern | adhesive tensile strength [N/mm²] | average [N/mm²] | average crack pattern |
|---|---|---|---|---|
| 62.5 | 100% PR | 0.32 | 0.41 | 100% PR |
| 80 | 100% PR | 0.41 | | |
| 87.5 | 100% PR | 0.45 | | |
| 80 | 100% PR | 0.41 | | |
| 82.5 | 100% PR | 0.42 | | |
| 95 | 100% PR | 0.48 | | |

**Table 4. Primer: Aufbrennsperre 1:4, Coating: MP 75 L Neuherberg**

| measured values scale | crack pattern | adhesive tensile strength [N/mm²] | average [N/mm²] | average crack pattern |
|---|---|---|---|---|
| 50 | 10%HR/90%PR | 0.25 | 0.29 | 39%HR / 61 %PR |
| 47.5 | 10%HR/90%PR | 0.24 | | |
| 50 | 80%HR/20%PR | 0.25 | | |
| 55 | 30%HR/70%PR | 0.28 | | |
| 57.5 | 85%HR/15%PR | 0.29 | | |
| 80 | 20%HR/80%PR | 0.41 | | |

**Table 5. Primer: Lightec 10%, Coating: MP 75 L Neuherberg**

| measured values scale | crack pattern | adhesive tensile strength [N/mm²] | average [N/mm²] | average crack pattern |
|---|---|---|---|---|
| 55 | 10%HR/90%PR | 0.28 | 0.32 | 8%HR/92%PR |
| 55 | 10%HR/90%PR | 0.28 | | |
| 65 | 0%HR/100%PR | 0.33 | | |
| 75 | 20%HR/80%PR | 0.38 | | |
| 65 | 0%HR/100%PR | 0.33 | | |
| 60 | 10%HR/90%PR | 0.31 | | |

**Table 6. Primer: CWS 30 10%, Coating: MP 75 L Neuherberg**

| measured values scale | crack pattern | adhesive tensile strength [N/mm²] | average [N/mm²] | average crack pattern |
|---|---|---|---|---|
| 55 | 20%HR/80%PR | 0.28 | 0.32 | 3%HR/97%PR |
| 85 | 0%HR/100%PR | 0.43 | | |
| 55 | 0%HR/100%PR | 0.28 | | |
| 55 | 0%HR/100%PR | 0.28 | | |
| 55 | 0%HR/100%PR | 0.28 | | |
| 72.5 | 0%HR/100%PR | 0.37 | | |

On the basis of the results of crack pattern and adhesive tensile strength in N/mm², conclusions can be drawn about the adhesion promotion.

As can be seen from the results, a primer made of pregelatinized starch is at least as good and sometimes even better as the conventional primer, but in any case significantly cheaper than a primer made of synthetic polymers.

In particular, comparable or better adhesion is shown by using the inventive starch solution as a primer, as the percentage of adhesive crack is reduced.

### Effect of primer on processing time

Processing and handling for plastering different substrates (red brick, cellular concrete, lime sandstone) was tested in view of different primers and plasters. Lime sandstone is highly absorbent, cellular concrete is less absorbent, and brick least absorbent.

The following table shows processing times for plaster MP 75 L Neuherberg for different substrates without primer and with different primers (Lightec 10%, CWS40 10%, Aufbrennsperre 1:4).

For the determination of the processing times, the following procedure was carried out: first, the primer was applied onto the substrate (apart from the "no primer" experiments) followed by 24 hours waiting, then the plaster was applied (defined as minute 0). During the hardening process of the plaster, several (standard) steps were conducted in this example. These steps (spreading (levelling), scratching, felting/roughening, 1^{st} smoothing and 2^{nd} smoothing) depend on the properties (e. g. the consistency) of the ingredients in the specific experiment at a specific time and are processed according to the times mentioned in the table (i. e. in a rather small time frame, e. g. +/- 10 min). The person skilled in the art knows according to his experience when to proceed with the next step, e. g. by testing the plaster with his fingers. Standard tools, which are known to the person skilled in the art, were used for the respective steps, e. g. a trapezoidal slat, an H-slat, a smoothing disc, a smoothing trowel, or a (surface) smoother. For the felting/roughening step a sponge disk (or sponge washer) with (some) water was used. The results (in minutes) are shown in the following table.

**Table 7. Coating: MP 75 L Neuherberg**

| work step | substrate | no primer | Lightec 10% | CWS40 10% | Aufbrennsperre 1:4 |
|---|---|---|---|---|---|
| | | | | | |
| spreading | cellular concrete | 45 | 80 | 80 | 75 |
| | lime sandstone | 65 | | | |
| | red brick | 40 | | | |
| | | | | | |
| scratching | cellular concrete | 65 | 115 | 115 | 100 |
| | lime sandstone | 90 | | | |
| | red brick | 55 | | | |
| | | | | | |
| felting/roughening | cellular concrete | 80 | 135 | 135 | 120 |
| | lime sandstone | 105 | | | |
| | red brick | 70 | | | |
| | | | | | |
| 1^{st} smoothing | cellular concrete | 90 | 150 | 150 | 145 |
| | lime sandstone | 120 | | | |
| | red brick | 75 | | | |
| | | | | | |
| 2^{nd} smoothing | cellular concrete | 160 | 220 | 220 | 210 |
| | lime sandstone | 180 | | | |
| | red brick | 125 | | | |

The result for Lightec 10% is very uniform for all substrates, and the effect is similar to Aufbrennsperre. The result for CWS40 10% is very uniform for all substrates, and the effect is similar to Aufbrennsperre.

The following table shows processing times for plaster Rotband Embsen for different substrates without primer and with different primers (Lightec 10%, CWS30 10%, Aufbrennsperre 1:4).

For the determination of the processing times the same procedure as above was used. The results are shown in the following table.

**Table 8. Coating: Rotband Embsen**

| work step | substrate | no primer | Lightec 10% | CWS30 10% | Aufbrennsperre 1:4 |
|---|---|---|---|---|---|
| | | | | | |
| spreading | cellular concrete | 60 | 75 | 75 | 70 |
| | lime sandstone | 70 | | | |
| | red brick | 40 | | | |
| | | | | | |
| scratching | cellular concrete | 75 | 100 | 100 | 95 |
| | lime sandstone | 90 | | | |
| | red brick | 60 | | | |
| | | | | | |
| Felting/roughening | cellular concrete | 85 | 110 | 110 | 100 |
| | lime sandstone | 100 | | | |
| | red brick | 65 | 120 | 120 | 110 |
| | | | | | |
| 1^{st} smoothing | cellular concrete | 90 | 125 | 125 | 105 |
| | lime sandstone | 110 | | | |
| | red brick | 75 | 130 | 130 | 120 |
| | | | | | |
| 2^{nd} smoothing | cellular concrete | 125 | 135 | 135 | 125 |
| | lime sandstone | 130 | | | |
| | red brick | 100 | 140 | 140 | |

The purpose of a primer is to improve adhesion by reducing the absorbency of the substrate and to achieve more uniform sucking on different substrates with different absorbencies.

The results show that the pregelatinized starch solution achieves similar effects to primer Aufbrennsperre. Based on the results, it is assumed that the pregelatinized starch reduces the absorbency of the substrate through film formation, but dissolves again through the applied plaster, partially migrates into the plaster and improves adhesion when re-filming.

## Claims

1. A process for coating a substrate comprising the steps of:
(i) applying a primer on the substrate;
(ii) applying a coating on the primed substrate; and
(iii) drying and/or hardening the applied coating;
wherein the primer is an aqueous primer comprising one or more pregelatinized starches.

2. The process according to claim 1, wherein the substrate is a mineral substrate or a non-mineral substrate, and/or wherein the substrate is an absorbing substrate or a non-absorbing substrate.

3. The process according to claim 1 or 2, wherein the substrate is selected from a brick or masonry, in particular an absorbent brick, a concrete substrate, a plasterboard, a filler, a plaster, stone, a tile or a wood substrate.

4. The process according to any one of claims 1 to 3, wherein the starch of the one or more pregelatinized starches is a starch of wheat, waxy wheat, potato, corn, waxy corn, rice or peas or a mixture of two or more thereof.

5. The process according to any one of the preceding claims, wherein the pregelatinized starch is a drum-dried pregelatinized starch or an extruded pregelatinized starch; and/or the one or more pregelatinized starches are based on an unmodified starch or a modified starch selected from a propoxylated starch, an enzyme-treated starch, an acid-treated starch, a phosphate-crosslinked starch or a coated starch.

6. The process according to any one of the preceding claims, wherein the primer further comprises one or more additives selected from preservatives, wetting agents, dispersing agents, defoamers, fillers, fibrous fillers, anti-blocking agents, and plasticizers, wherein the total amount of additives is preferably less than 5% by weight, based on the dry weight of the primer.

7. The process according to any one of the preceding claims, wherein the process further comprises the step of preparing the aqueous primer by adding water to a solid primer comprising or consisting of one or more pregelatinized starches, wherein the solid is preferably a free-flowing solid.

8. The process according to any one of the preceding claims, wherein the primer comprises 80 % by weight to 100 % by weight, preferably 90 % by weight to 97 % by weight, of the one or more pregelatinized starches, based on the dry weight of the primer.

9. The process according to any one of the preceding claims, wherein the water content of the aqueous primer is 80 % by weight to 99 % by weight, preferably 85 % by weight to 95 % by weight, most preferably 89 % by weight to 91 % by weight, based on the total weight of the aqueous primer.

10. The process according to any one of the preceding claims, wherein the primer applied on the surface is dried before the coating is applied, wherein the drying time is preferably from 1 to 24 hours.

11. The process according to any one of the preceding claims, wherein the coating is a plaster or filler, preferably selected from a plaster or filler based on clay, gypsum, lime, cement, cement-lime or synthetic resin.

12. The process according to any one of the preceding claims, wherein the coating is applied by filling or plastering.

13. A coated substrate, obtainable by a process according to any one of claims 1 to 12.

14. A primer composition to be used on a substrate in order to enhance adhesion of a subsequent coating on the substrate, wherein the primer composition consists of or comprises one or more pregelatinized starches.

15. Use of composition consisting of or comprising one or more pregelatinized starches for priming a substrate to be coated with a coating.

16. Use according to claim 15, wherein the composition is a solid, preferably a free-flowing solid, to be supplemented with water before use for priming, or wherein the composition is a ready-to-use aqueous primer or concentrate, which can be diluted with water before use, if necessary.
